# EUROPÄISCHE PATENTSCHRIFT

(11) **EP 1 078 220 B1**
(45) Veröffentlichungstag und Bekanntmachung des Hinweises auf die Patenterteilung: **27.11.2002**
(21) Anmeldenummer: 99952114.9
(22) Anmeldetag: 11.05.1999
(51) Int. Cl.: G01C 11/02

(54) **VERFAHREN ZUR BILDABTASTUNG**
IMAGE SCANNING METHOD
PROCEDE DE BALAYAGE D'IMAGE

(30) Priorität: 18.05.1998 DE 19822249
(43) Veröffentlichungstag der Anmeldung: 28.02.2001
(73) Patentinhaber: HONEYWELL AG, 63067 Offenbach am Main (DE); Fraunhofer-Gesellschaft zur Förderung der angewandten Forschung e.V., 80636 München (DE)
(72) Erfinder: FÖSSEL, Siegfried, D-91054 Erlangen (DE); TRUNK, Lothar, D-63879 Weibersbrunn (DE); MÖLLER, Heino, D-91056 Erlangen (DE); DRACHSLER, Erwin, D-63071 Offenbach (DE)
(74) Vertreter: Keil, Rainer A., Dipl.-Phys. Dr.
(86) Internationale Anmeldenummer: EP9903288
(87) Internationale Veröffentlichungsnummer: WO99060334

(56) Entgegenhaltungen:
- GB-A- 2 302 472
- US-A- 5 043 924

## Beschreibung

Die vorliegende Erfindung bezieht sich auf ein Verfahren zur Bildabtastung nach dem Gattungsbegriff des Patentanspruches 1.

Ein derartiges Verfahren findet insbesondere Anwendung bei der Aufklärung eines Terrains aus der Luft. Zu diesem Zweck sind neben Tageslicht-Kameras in einem Flugzeug oder in einem unter dem Flugzeug angeordneten Behälter eine Infrarot-Kamera angeordnet, die bei schlechten Sichtverhältnissen und in der Nacht eine thermische Abbildung des überflogenen Terrains aufzunehmen gestattet. Die aufgenommenen Bilder können dem Piloten im Cockpit auf einem TV-Monitor angezeigt werden oder sie können auf einem Videorecorder für die spätere Auswertung aufgezeichnet werden. Ein derartiges System ist aus der US-A-5 043 924 bekannt.

In der für die Anmelderin erteilten EP 0 503 103 B1 ist ein Infrarot-Abbildungssystem dargestellt und beschrieben, das durch eine geeignet ausgelegte Detektoranordnung und einen elektronischen Zoom auch die Aufnahme von Wärmebildern im Tiefflug über einen großen Abtastwinkel ohne Bildverzerrung ermöglicht.

Die in dem bekannten Abbildungssystem verwendeten IR-Zeilenabtaster (IRLS = Infrared Line Scanner) fügen die über einen rotierenden Abtastspiegel auf einer Detektorbank aufgenommenen Streifenbilder nur dann lückenlos aneinander, wenn die Abtastrate, d.h. die Drehzahl des Abtastspiegels auf die Flughöhe und Fluggeschwindigkeit des Flugzeuges abgestimmt ist. Die Streifenbilder überlappen sich (Overscan), wenn die Flughöhe den optimalen Wert übersteigt bzw. wenn die Geschwindigkeit unter dem optimalen Wert liegt. Ist die Flughöhe zu niedrig oder die Geschwindigkeit zu hoch, so entstehen Lücken zwischen den Streifen. Der Überlappungsfaktor, d.h. der Overscan-Faktor gibt das Verhältnis der Höhe des überlappenden Bereichs zu der Höhe des Bildstreifens an.

Um Lücken- und überlappfreie Aufnahmen zu erhalten, muß also entweder die Bildfrequenz, d.h. die Abtastrate des Drehspiegels an die Flughöhe und die Flugzeuggeschwindigkeit angepaßt werden oder das Flugzeug ist gezwungen, Flughöhe und Geschwindigkeit genau einzuhalten.

Eine Anpassung der Abtastate des Abtastspiegels ist zwar auch möglich aber wegen der bewegten Massen des Spiegelrades regelungstechnisch schwer zu beherrschen.

Neben dem Overscan ergibt sich auf Grund von Toleranzen in dem IR-Zeilenabtaster (Jitter. Synchronisationsprobleme) noch ein statistischer Bildversatz sowohl in horizontaler als auch in vertikaler Richtung.

Aufgabe der vorliegenden Erfindung ist es daher, unter Berücksichtigung der vorgenannten Fehlerquellen ein Verfahren anzugeben, durch welches die Qualität der aufgenommenen Bilder so verbessert, daß eine Auswertung ermöglicht wird.

Die Lösung dieser Aufgabe gelingt gemäß den kennzeichnenden Merkmalen des Patentanspruches 1. Weitere vorteilhafte Ausgestaltungen des Verfahrens gemäß der Erfindung sind den abhängigen Ansprüchen entnehmbar.

Anhand der Figuren der beiliegenden Zeichnung sei im folgenden das erfindungsgemäße Verfahren anhand eines Ausführungsbeispieles beschrieben. Es zeigen:
- Fig. 1: das Prinzip einer Flugzeug-Luftaufklärung;
- Fig. 2: die wesentlichen Elemente einer IRLS-Anordnung;
- Fig. 3: unterschiedliche Streifenbilder;
- Fig. 4: ein Einzelbild mit Versatz;
- Fig. 5: mehrere Bilder zur Erläuterung eines Schrittes des erfindungsgemäßen Verfahrens;
- Fig. 6: überlappende Bilder zur Erläuterung eines weiteren Schrittes des erfindungsgemäßen Verfahrens;
- Fig. 7: ein Bild eines aufgenommenen Terrains mit Overscan und Versatz der Streifenbilder;
- Fig. 8: ein Bild des aufgenommenen Terrains mit korrigiertem Overscan;
- Fig. 9: ein Bild des aufgenommenen Terrains, wobei der Overscan und der Versatz korrigiert ist;
- Fig. 10: ein Bild des aufgenommenen Terrains mit korrigiertem Overscan und Versatz und vorgenommener Mittelung des Bildinhaltes;
- Fig. 11: ein Blockschaltbild der Hardware des Gesamtsystems; und
- Fig. 12: ein Blockschaltbild der Hardware der Aufklärungs-Verwaltungseinheit, in welcher das erfindungsgemäße Verfahren verwirklicht ist.

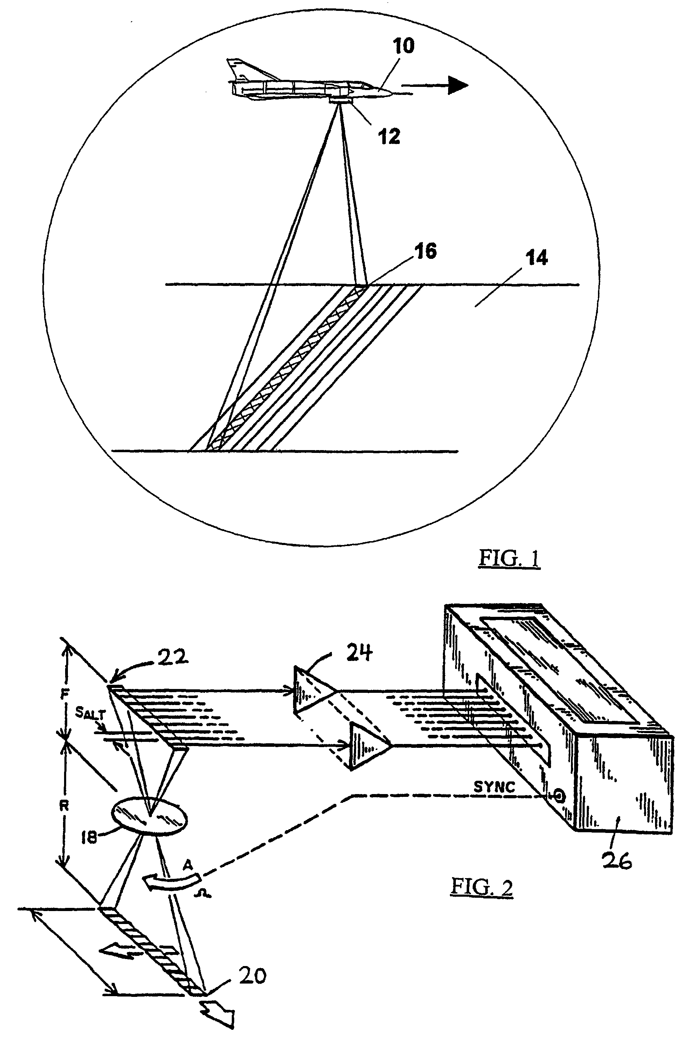

Gemäß Fig. 1 ist unter einem Flugzeug 10 ein Behälter 12 angeordnet, in welchem ein IR-Zeilenabtaster mit zugehöriger Elektronik angeordnet ist, um das darunter befindliche Terrain 14 in Streifen 16 abzutasten und ein Wärmebild zu erzeugen.

Fig. 2 zeigt das Prinzip der IR-Streifenabtastung. Eine Optik 18 bildet einen Geländestreifen 20 auf einer aus n Elementen bestehenden Detektoranordnung 22 ab. Die Optik 18 kann aus einer schwenkbaren Linse oder einer Spiegelradanordnung bestehen, wie dies im Stand der Technik bekannt ist. Die Signale der Detektoren 22 werden über Verstärker 24 einer Elektronik- und Aufzeichnungseinheit 26 zugeführt, die ihrerseits den Abtastwinkel A und die Abtastrate Ω der Optik 18 steuert.

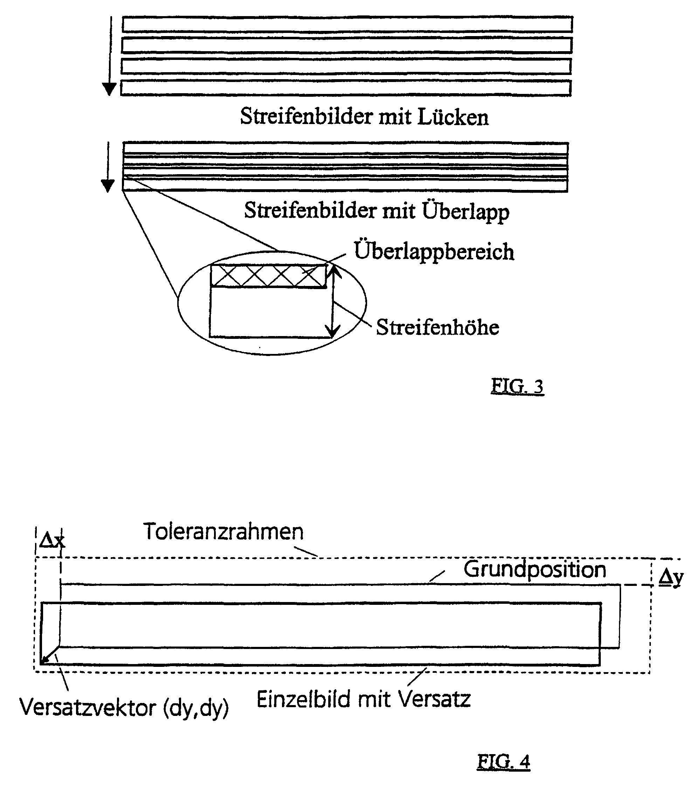

Gemäß Fig. 3 ist erkennbar, daß je nach Höhe und Geschwindigkeit des Flugzeuges bei konstanter Abtastrate der Optik Streifenbilder mit Lücken oder mit Überlappung entstehen. Bei der vorliegenden Erfindung wird für eine vorgegebene Aufklärungshöhe zwischen z.B. 2000 und 8000 Fuß die Abtastrate so gewählt, daß keine Lücken entstehen, sondern insbesondere bei größeren Höhen immer eine Überlappung auftritt. Bei vorgegebener Streifenhöhe ergibt sich somit immer ein Bereich, der mit einem zuvor bereits aufgenommenen Bildstreifen überlappt, d.h. der sogenannte Überlappbereich, wie dies in Fig. 3 durch den unteren Bildausschnitt dargestellt ist.

Gemäß Fig. 4 ergibt sich durch Toleranzen in dem IR-Zeilenabtaster, wie z.B. Jitter, fehlerhafte Synchronisation usw. ein zusätzlicher statistischer Bildversatz Δx in der Horizontalen und Δy in der Vertikalen. Der Versatz des Einzelbildes gegenüber der Soll-Grundposition kann hierbei in einem Toleranzrahmen durch einen Versatzvektor dx, dy beschrieben werden. Realistische Werte sind hierbei ein Versatz um ± 1 Pixel in der Vertikalen und ± 3 Pixel in der Horizontalen.

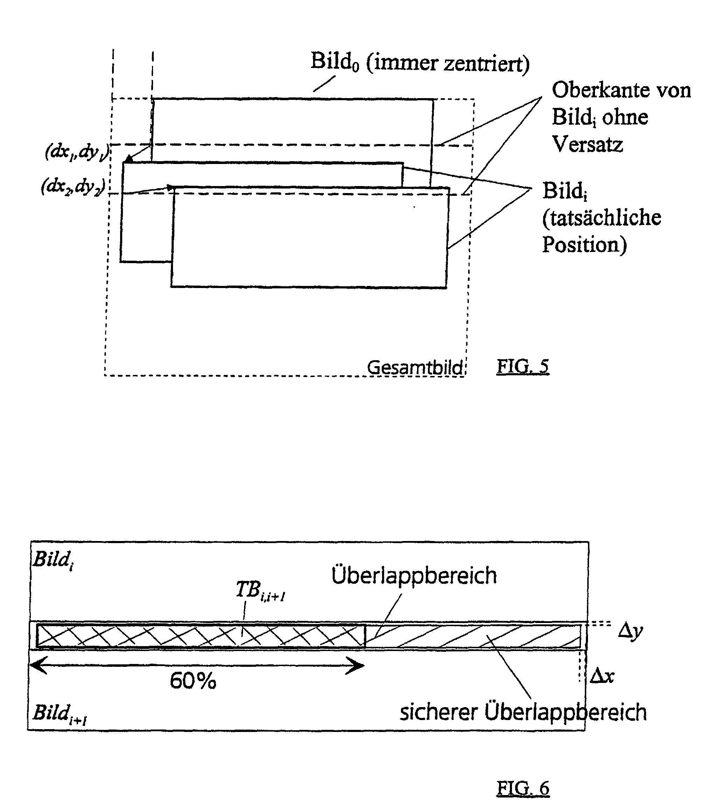

Gemäß Fig. 5 und dem erfindungsgemäßen Verfahren wird nun ein Ausgangsbild (Bild ₀) im Gesamtbild zentriert. Für die folgenden Bilder (Bildᵢ) werden die Versatzvektoren dxᵢ, dyᵢ berechnet und die Bilder werden auf das Ausgangsbild ausgerichtet. Aus den nunmehr aufeinander ausgerichteten Bildern werden Teilbilder entsprechend dem Überlappungsbereich ausgeblendet, die bis auf das Rauschen identische Bildinhalte aufweisen.

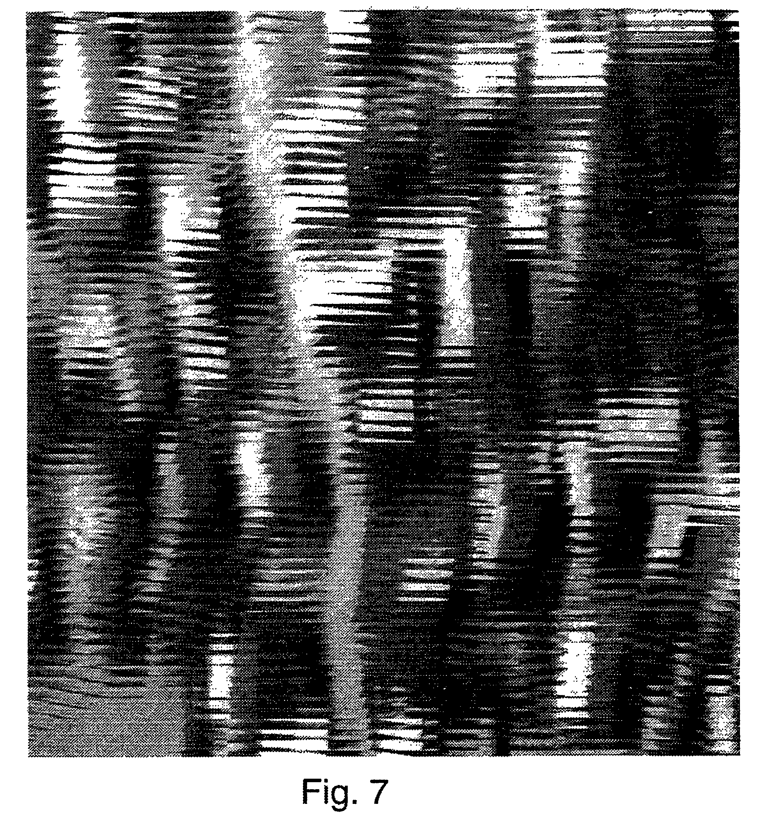

Dies ist in Fig. 6 dargestellt. Gemäß dieser Figur wird der durch den Overscan-Faktor bestimmte Überlappungsbereich zur Berücksichtigung des statistischen Versatzes um einen Toleranzrahmen Δx jeweils rechts und links und um einen Toleranzrahmen Δy jeweils nach oben und nach unten reduziert. Diese Reduktion ergibt den sicheren Überlappbereich. Die Höhe des Überlappbereiches muß demnach 2 Δx übersteigen; ansonsten liegt kein sicherer Überlappbereich vor.

Aus Gründen der begrenzt zur Verfügung stehenden Rechenzeit wird von der Breite des sicheren Überlappbereiches nur ein einstellbarer Prozentsatz berücksichtigt. Im in Fig. 6 dargestellten Fall werden nur 60% der überlappenden Teilbilder mit vergleichbarem Bildinhalt rechnerisch verarbeitet. Im Bereich der Bildüberlappung erfolgt eine Mittelwertbildung für jedes Pixel. Eine Mittelung über N Teilbilder führt zu einer Verbesserung des Signal/Rauschabstandes um den Faktor √N.

Das erfindungsgemäße Verfahren gestattet bewußt eine Überlappung der Bildinhalte (Overscan) bis zu einem bestimmten Prozentsatz. Die Beseitigung dieses Overscans führt zu einer Verbesserung der Bildqualität, indem über die mehrfach einem Bildpunkt zugeordneten Pixel gemittelt wird. Durch vorangegangene Beseitigung des Bildversatzes wird die Bildqualität noch zusätzlich verbessert.

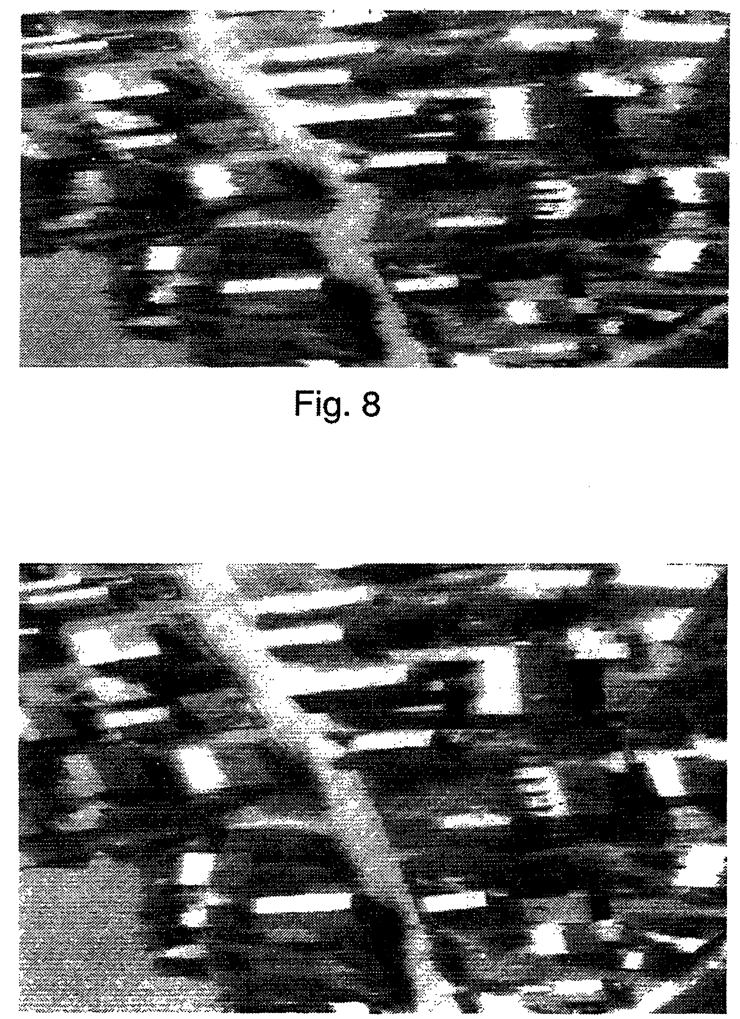

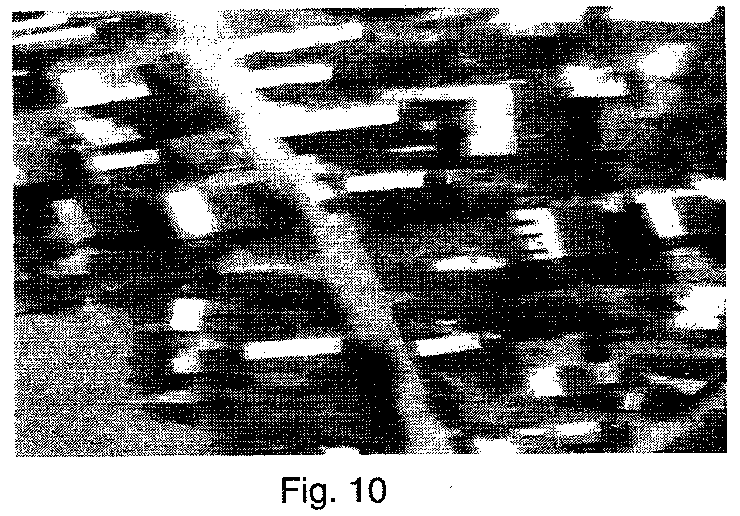

In den Figuren 7 bis 10 sind die Auswirkungen des erfindungsgemäßen Verfahrens deutlich veranschaulicht. Fig. 7 zeigt das Bild einer Terrainaufnahme ohne Behandlung des vorliegenden Overscans und Versatzes. Gemäß Fig. 8 ist der Overscan beseitigt. In Fig. 9 ist schließlich sowohl der Overscan als auch der Versatz korrigiert und in Fig. 10 erfolgte zusätzlich eine Mittelung über die gleichen Bildpunkten zugeordneten Pixel.

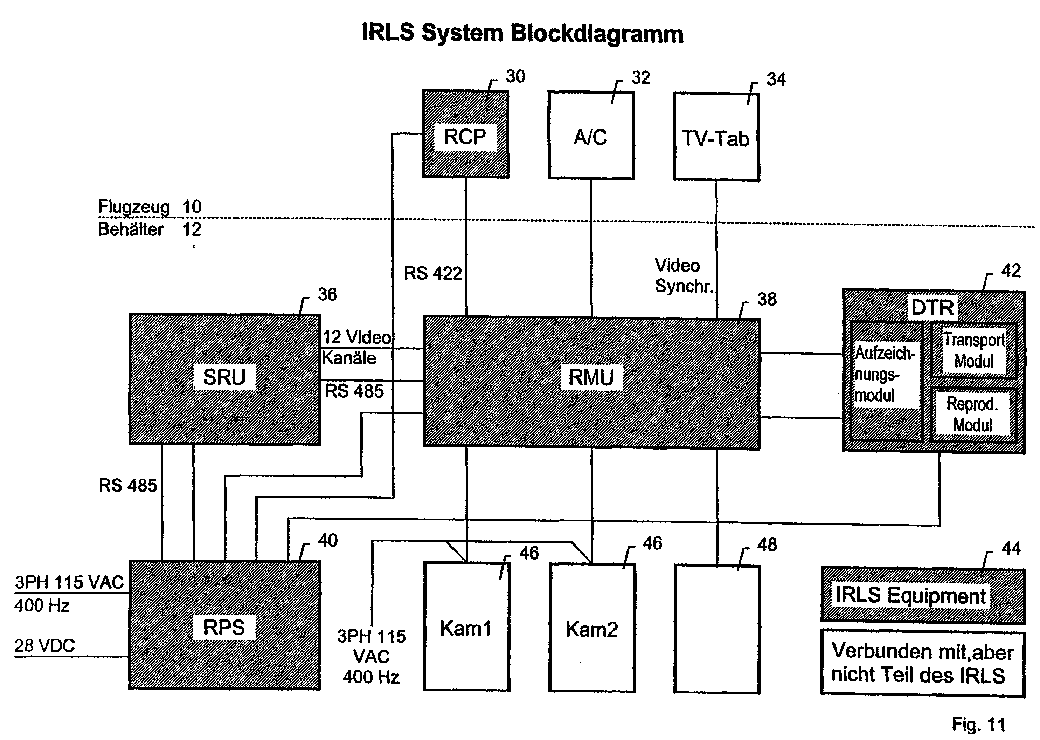

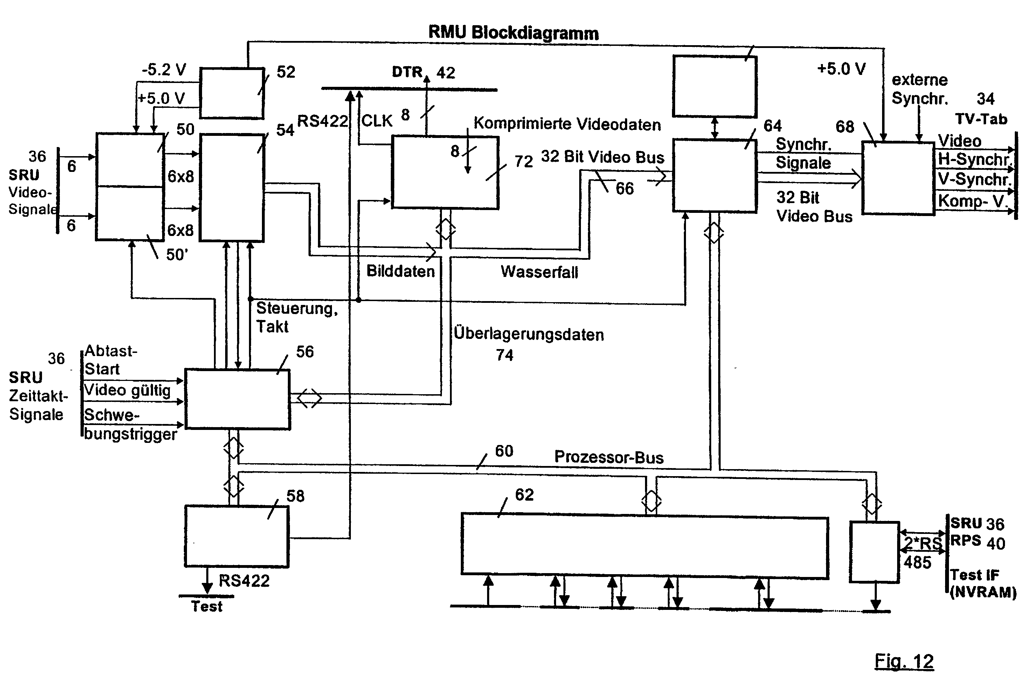

In den Figuren 11 und 12 sind Blockschaltbilder der Hardware dargestellt, in welcher die vorliegende Erfindung verwirklicht ist.

In Fig. 11 befinden sich die oberhalb der gestrichelten Linie dargestellten Komponenten in dem Flugzeug 10 und die unterhalb der gestrichelten Linie dargestellten Komponenten befinden sich in dem Behälter 12. In dem Flugzeug 10 sind eine Aufklärungs-Steuerkonsole 30 (RCP = Reconnaissance Control Panel), ein Block 32 für Flugzeugdaten. wie insbesondere Geschwindigkeit und Höhe, und ein Femsehmonitor 34 angeordnet.

In dem Behälter 12 befindet sich eine Abtast- und Empfangseinheit 36 (SRU = Scanner Receiver Unit), eine Aufklärungs-Verwaltungseinheit 38 (RMU = Reconnaissance Management Unit), eine Aufklärungs-Spannungsversorgung 40 (RPS = Reconnaissance Power Supply) und ein digitaler Bandrecorder 42 (DTR = Digital Tape Recorder).Die grau schraffierten Komponenten bilden zusammen das IR-Zeilenabtastgerät 44 (IRLS = Infrared Line Scanner System), während die anderen Blöcke keinen Teil dieses Gerätes bilden. Die anderen Blöcke umfassen in dem Behälter 12 noch zwei Tageslichtkameras 46, 46' und diverse durch den Block 48 veranschaulichte Geräte, wie z.B. eine Klimaanlage. verschließbare Fenster für die Kameras usw.

Gemäß Fig. 12 ist ein Blockschaltbild der RMU 38 dargestellt. Die SRU 36 liefert pro Bildstreifen in 12 Kanälen jeweils 12 288 Bildpunkte, die zusammengefaßt in jeweils 6 Kanälen zwei Analog/Digital-Wandlern 50, 50' zugeführt werden, welche die Bildpunkte pro Pixel jeweils mit 8 Bit codieren. Eine Spannungsversorgung 52 speist hierbei die Analog/Digital-Wandler 50, 50'. Die digitalen Paralleldaten werden in 2 x 6 Kanälen einem Parallel/Serienwandler 54 zugeführt, der sie in serielle Daten umwandelt. Zeittaktsignale von der SRU 36 werden einer Eingangssteuerung 56 zugeführt, die den Steuertakt für den Analog/Digital-Wandler und den Parallel/Serien-Wandler sowie für weitere Komponenten liefert. Ein Prozessor 58 ist über einen Prozessorbus 60 an die Eingangssteuerung 56, eine Schnittstelle 62 zum Flugzeug, zu den Kameras usw. und an eine Bild-Verarbeitungseinheit 64 angeschlossen. Der Prozessor 58 erhält unter anderem die Geschwindigkeit und die Höhe des Flugzeuges zugeführt und er errechnet hieraus den Überlappungsfaktor (Overscan) der nacheinander aufgenommenen Bildstreifen. Die Bild-Verarbeitungseinheit 64 enthält einen Bildprozessor und einen Grafikprozessor zum Einblenden von Zusatzdaten in die Bilddaten, was nicht näher dargestellt ist. Der Bildprozessor erhält über einen 32 Bit-Videobus 66 die Bilddaten in Form von bewegten Bilddaten (Waterfall) zugeführt und er verschiebt die laufend eingehenden Streifenbilder mit Hilfe des jeweils berechneten Versatzvektors so, daß sie aufeinander ausgerichtet sind und er mittelt den Bildinhalt in dem überlappenden Bereich. Die so behandelten Bilder werden über einen Ausgangs-Bildspeicher 68 auf dem TV-Monitor 34 zur Darstellung gebracht bzw. in einem Standbildspeicher 70 eingefroren.

Andererseits ist vorgesehen, die Streifenbilder so wie sie aufgenommen werden mit Überlappung und Versatz nach Behandlung in einer Datenkompressions/Dekompressionseinheit 72 auf dem DTR 42 aufzuzeichnen. Sowohl bei der Aufzeichnung auf dem DTR 42 als auch bei der Darstellung auf dem TV-Monitor 34 werden den Bildern des Terrains Daten überlagert, die der Prozessor 58 z.B. von der Schnittstelle 62 zugeführt erhält und die über einen Überlagerungs-Datenbus 74 zugeführt werden. Die auf dem DTR 42 aufgezeichneten Daten können wiederum ausgelesen werden und sodann vor der Darstellung auf dem TV-Monitor 34 zur Bildverbesserung der zuvor beschriebenen Behandlung bezüglich Überlappung und Versatz unterzogen werden.

## Patentansprüche

1. Verfahren zur Bildabtastung einer Fläche, insbesondere der Erdoberfläche, mit einem über der Fläche in unterschiedlicher Höhe und mit unterschiedlicher Geschwindigkeit bewegten Abtaster, insbesondere einem Infrarot-Zeilenabtaster, **gekennzeichnet durch** folgende Schritte:
a) entsprechend der Höhe und der Geschwindigkeit des Abtasters über der abgetasteten Fläche wird ein Overscan-Faktor ermittelt;
b) ein erstes Bild (Bild₀) wird im Gesamtbild zentriert positioniert;
c) für nachfolgend abgetastete Bilder (Bildᵢ, Bildᵢ₊₁, ...) wird entsprechend ihrem Bildversatz (Δx,Δy) ein Versatzvektor (dxᵢ,dyᵢ) berechnet;
d) die Bilder werden mit Hilfe der Versatzvektoren aufeinander ausgerichtet; und
e) in Bildbereichen mit **durch** den Overscan-Faktor festgelegter Überlappung wird der Bildinhalt der aufeinander ausgerichteten Bilder gemittelt.

2. Verfahren nach Anspruch 1, **dadurch gekennzeichnet, daß** ein sicherer Überlappbereich definiert wird, in welchem die Errechnung des Versatzvektors vorgenommen wird.

3. Verfahren nach Anspruch 2, **dadurch gekennzeichnet, daß** aus Gründen der beschränkten Rechenzeit die Berechnung des Versatzvektors nur über einen Teil des sicheren Überlappbereiches erfolgt.

## Claims

1. Image scanning method of an area, in particular the surface of the earth, having a scanner, in particular an infrared line scanner, moved over the area at different height and at different speed, **characterized by** the following steps:
a) an overscan factor is determined in accordance with the height and the speed of the scanner over the scanned area;
b) a first image (image₀) is positioned centred in the complete image;
c) an offset vector (dxᵢ, dyᵢ) is calculated for subsequently scanned pictures (image;, imageᵢ₊₁) in accordance with their image offset (Δx, Δy);
d) the images are aligned with one another with the aid of the offset vectors; and
e) the image content of the images which are aligned with one another is averaged in zones of the image with an overlap defined by the overscan factor.

2. Method according to claim 1, **characterized in that** a safe overlap zone is defined in which the calculation of the offset vector is performed.

3. Method according to claim 2, **characterized in that**, for reasons of limited computing time, the offset vector is calculated only over part of the safe overlap zone.

## Revendications

1. Procédé de balayage d'image d'une surface, en particulier de la surface terrestre, avec un dispositif de balayage déplacé sur la surface à différentes hauteurs et avec différentes vitesses, en particulier un dispositif de balayage de ligne infra-rouge, **caractérisé par** les étapes suivantes :
a) un facteur d'e recouvrement est déterminé en fonction de la hauteur et de la vitesse du dispositif de balayage sur la surface balayée ;
b) une première image (Image₀) est centrée sur l'image complète ;
c) un vecteur de décalage (dxᵢ, dyᵢ) est calculé pour les images balayées suivantes (Imageᵢ, Imageᵢ₊₁, ...) en fonction de leur décalage d'image (Δₓ, Δ_{y}) ;
d) les images sont alignées les unes sur les autres au moyen des vecteurs de décalage ; et
e) la valeur moyenne du contenu des images alignées les unes sur les autres dans les zones d'image de recouvrement constaté avec le facteur de recouvrement est calculée.

2. Procédé selon la revendication 1, **caractérisé en ce qu**'on définit une zone de recouvrement sûre dans laquelle le calcul du vecteur de décalage est entrepris.

3. Procédé selon la revendication 2, **caractérisé en ce que** en raison du temps de calcul limité, le vecteur de décalage n'est calculé que sur une partie de la zone de recouvrement sûre.
